# DEMANDE DE BREVET EUROPEEN

(11) **EP 0 701 039 A1**
(43) Date de publication de la demande: **13.03.1996**
(21) Numéro de dépôt: 94114264.8
(22) Date de dépôt: 10.09.1994
(51) Int. Cl.: E06B 9/60, E06B 9/50, B60J 1/20

(54) **Dispositif de réglage de la tension d'un enrouleur automatique de store**

(71) Demandeur: PARA-PRESS S.A., L-3201 Bettembourg (LU)
(72) Inventeur: Resibois, Raymond, B-6750 Signeulx (BE)
(74) Mandataire: Meyers, Ernest

(57) **Abrégé**

Le store s'enroule automatiquement sur son tambour de support (12) sous l'action d'un ressort à boudin (26) disposé dans le tambour et fixé de part et d'autre sur le tambour (12) et sur un arbre (24) de support de celui-ci. Cet arbre (24) qui est logé dans un cadre est télescopique par rapport au tambour (12) et peut être tendu depuis l'extérieur par enfoncement et rotation contre l'action du ressort (26).

Application aux caravanes et véhicules de loisir.

## Description

La présente invention concerne un dispositif de réglage de la tension d'un enrouleur automatique de store comprenant un tambour rotatif supporté, de part et d'autre, dans un cadre appliqué sur le côté intérieur d'une fenêtre ou d'une porte, au moins un ressort à boudin disposé axialement a l'intérieur du tambour et fixé, par l'une de ses extrémités, au tambour et, par l'autre extrémité, sur un arbre traversant axialement le ressort et supporté, à l'extérieur du tambour, dans un logement dudit cadre de manière que ledit tambour puisse tourner autour dudit arbre, dans un sens, contre l'action du ressort et, dans le sens contraire, sous l'action dudit ressort.

L'invention vise plus particulièrement des stores pour caravanes ou véhicules de loisirs. Elle peut toutefois également trouver application dans des stores pour fenêtres de bâtiments ou fenêtres du type velux. Le terme store est à comprendre dans son sens le plus large et englobe aussi bien des stores d'obscurcissement que des moustiquaires etc..

Ces stores sont généralement à enroulement automatique sous l'action d'un ressort de rappel logé dans l'enrouleur. Ces enrouleurs automatiques ont le double avantage d'enrouler automatiquement le store lorsque celui ci est débloqué de sa position déroulée et de garantir que le store reste bien tendu à l'état déroulé.

Il arrive toutefois souvent que, après un certain temps d'utilisation, le ressort de rappel de l'enrouleur manifeste des signes de "fatigue" et n'est plus en mesure d'enrouler à fond le store, si bien qu'une assistance manuelle est nécessaire. Le seul remède efficace était, jusqu'à présent, le remplacement de tout l'enrouleur.

Le but de la présente invention est de prévoir un dispositif de réglage de la tension d'un enrouleur automatique de store qui permet d'augmenter la tension du ressort sans démontage de l'enrouleur et de compenser ainsi ses pertes de puissance.

Pour atteindre cet objectif, la présente invention prévoit un dispositif du genre décrit dans le préambule qui est essentiellement caractérisé en ce que ledit arbre est télescopique par rapport au tambour, en ce que l'extrémité libre de l'arbre et son logement dans le cadre comportent des moyens de verrouillage de l'arbre dans une position angulaire fixe et que lesdits moyens peuvent être déverrouillés depuis l'extérieur du cadre par enfoncement de l'arbre contre l'action du ressort à boudin pour modifier la position angulaire de l'arbre.

Selon un mode de réalisation avantageux, le logement est traversé par un passage axial destiné à recevoir l'extrémité de l'arbre et comporte, du côté intérieur, des cannelures radiales pour recevoir des ailettes correspondantes de l'arbre.

Le logement comporte, de préférence, quatre cannelures disposées en croix tandis que l'arbre comporte deux ailettes diamétralement opposées.

La tête de l'arbre peut comporter un rainure diamétrale pour être manoeuvrée à l'aide de la pointe d'un tournevis.

Il est ainsi possible de tourner l'arbre par pas successifs de 90° et d'augmenter ainsi la tension du ressort de rappel.

D'autres particularités et caractéristiques ressortiront d'un mode de réalisation avantageux présenté ci-dessous, à titre d'illustration, en référence aux dessins annexés dans lesquels:
la FIGURE 1 est une vue de face, partiellement en coupe, d'un enrouleur automatique selon la présente invention;
la FIGURE 2 est une vue en coupe d'une pièce d'angle d'un cadre de fenêtre;
la FIGURE 3 est une vue axiale de la pièce de la FIGURE 2;
la FIGURE 4 est une vue analogue à celle de la FIGURE 2 après montage de l'enrouleur;
la FIGURE 5 est une vue analogue à celle de la FIGURE 3 après montage de l'enrouleur.

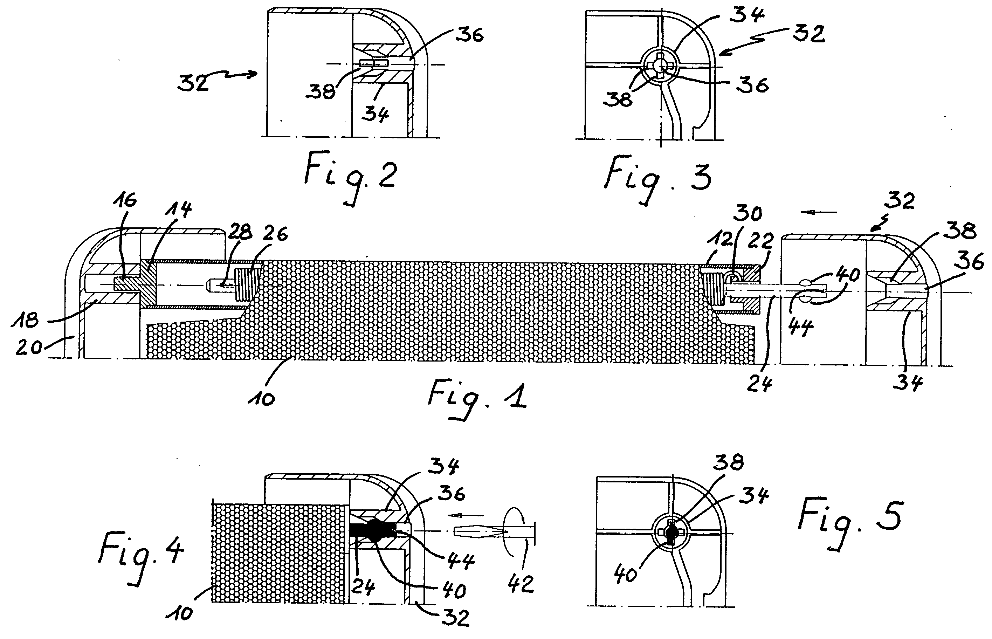

La référence 10 sur la FIGURE 1 désigne un store qui peut être un store d'obscurcissement ou une moustiquaire. Ce store 10 est attaché à un tambour cylindrique 12 à enroulement automatique. Le tambour 12 est fermé, à l'une de ses extrémités, par un bouchon 14 portant, du côté extérieur, un tourillon axial 16 pouvant tourner dans un palier 18 d'un cadre ou d'une pièce d'angle 20 d'un cadre servant de logement et de support au store 10.

Du côté opposé, le tambour 12 est fermé par un second bouchon 22 qui est traversé axialement par un arbre 24, de sorte que le tambour 12 peut tourner autour de l'arbre 24 qui, en fonctionnement, est immobile du point de vue axial et du point de vue angulaire. A l'intérieur du tambour 12 l'arbre 24 taverse un long ressort à boudin 26 dont l'une des extrémités est ancrée en 28 sur l'arbre 24 et l'autre extrémité en 30 sur le bouchon 22 ou sur le tambour 12. Grâce à cet arrangement, la rotation du tambour 12 autour de l'arbre 24 se fait, dans un sens, en l'occurrence le sens du déroulement du store 10, contre l'action du ressort 26 et, dans le sens opposé, c'est-à-dire le sens de l'enroulement du store 10, sous l'action du ressort 26.

L'arbre 24 est supporté, à l'extérieur du tambour 12, dans le cadre ou dans une pièce d'angle 32 de celui-ci. Comme le montrent les FIGURES 1-3, la pièce d'angle 32 comporte, à cet effet, un logement cylindrique 34 avec un passage axial 36 dont le diamètre permet la pénétration de l'arbre 24. Le logement 34 présente, du côté intérieur, plusieurs, en l'occurrence quatre cannelures 38 disposées en croix autour du passage 36 et destinées à recevoir une paire d'ailettes 40 diamétralement opposées sur l'arbre 24.

En vue du montage du store, le tambour 12 est d'abord engagé dans la pièce d'angle 20 qui peut être préalablement fixée sur la paroi autour de la fenêtre. La pièce d'angle opposée 32 est ensuite glissée sur l'arbre 24 (ce qui est symbolisé par la flèche sur la FIGURE 1) jusque dans la position selon la FIGURE 4 dans laquelle la pièce 32 peut également être vissée sur la paroi. Dans cette position, l'arbre 24 est bien supporté dans son logement 34, tandis que les ailettes 40 sont bloquées dans deux cannelures opposées 38 (voir FIGURE 5) du logement, ce qui empêche toute rotation de l'arbre 24 et n'autorise une rotation du tambour 12 que sous l'action du ressort à boudin 26 ou contre l'action de celui-ci.

En revanche et comme le montre la FIGURE 4, l'arbre 24 est accessible depuis l'extérieur à travers le passage 36 à l'aide, par exemple, d'un tournevis 42 engageable dans une rainure diamétrale 44 sur la tête de l'arbre 24. Etant donné que l'arbre 24 est axialement télescopique contre l'action du ressort à boudin 26, il peut être enfoncé à l'aide du tournevis 42 pour faire sortir les ailettes 40 de l'emprise des cannelures 38 tout en restant maintenu dans le logement 34. L'arbre 24 ainsi enfoncé peut, dans cette position, être tourné à l'aide du tournevis 42 par pas angulaires successifs de 90° pour tendre le ressort de rappel 26 si la force de celui-ci ne permet plus un enroulement automatique et complet du store 10. A noter que lors de l'enfoncement de l'arbre 24, les ailettes 40 forment des butées sur le bouchon 22, si bien qu'il n'est pas possible d'enfoncer complètement l'arbre avec le risque de désaxer le tambour 12 de son logement 34.

Au lieu d'une suspension à un seul ressort de rappel comme sur la FIGURE 1, il est possible de prévoir une suspension à double ressort de rappel, c'est-à-dire que le tambour est supporté du côté gauche de la même façon que du côté droit.

## Revendications

1. Dispositif de réglage de la tension d'un enrouleur automatique de store, comprenant un tambour rotatif (12) supporté, de part d'autre, dans un cadre appliqué sur le côté intérieur d'une fenêtre ou d'une porte, au moins un ressort à boudin (26) disposé axialement à l'intérieur du tambour (12) et fixé, par l'une de ses extrémités, au tambour (12) et, par l'autre extrémité, sur un arbre (24) traversant axialement le ressort (26) et supporté, à l'extérieur du tambour (12), dans un logement (34) dudit cadre de manière que le tambour puisse tourner autour dudit arbre (24), dans un sens, contre l'action du ressort (26) et, dans le sens contraire, sous l'action dudit ressort (26), caractérisé en ce que ledit arbre (24) est télescopique par rapport au tambour (12), en ce que l'extrémité libre de l'arbre (24) et son logement (34) dans le cadre comportent des moyens de verrouillage de l'arbre dans une position angulaire fixe et que lesdits moyens peuvent être déverrouillés depuis l'extérieur du cadre par enfoncement de l'arbre (24) contre l'action du ressort à boudin (26) pour modifier la position angulaire de l'arbre (24).

2. Dispositif selon la revendication 1, caractérisé en ce que ledit logement (34) est traversé par un passage axial (36) destiné à recevoir, par pénétration, l'extrémité de l'arbre (24) et qui comporte, du côté intérieur, des cannelures radiales (38) pour recevoir des ailettes correspondantes (40) de l'arbre (24).

3. Dispositif selon la revendication 2, caractérisé en ce que le logement comporte quatre cannelures (38) disposées en croix et, en ce que l'arbre (24) comporte deux ailettes (40) diamétralement opposées.

4. Dispositif selon l'une quelconque des revendications 1-3, caracterisé en ce que la tête de l'arbre (24) comporte une rainure diamétrale (44) pour être manoeuvré à l'aide de la pointe d'un tournevis (42) à travers le passage axial (36).
